# EUROPEAN PATENT APPLICATION

(11) **EP 3 187 146 A1**
(43) Date of publication of application: **05.07.2017**
(21) Application number: 14900763.5
(22) Date of filing: 16.09.2014
(51) Int. Cl.: A61C 17/022, A61C 17/024

(54) **ORAL CLEANER USING COMPRESSED AIR**

(30) Priority: 29.08.2014 KR 20140114232
(71) Applicant: Shin, Chun Woo, Jeonju-si, Jeollabuk-do 560-726 (KR)
(72) Inventor: Shin, Chun Woo, Jeonju-si, Jeollabuk-do 560-726 (KR)
(74) Representative: Isarpatent
(86) International application number: PCT/KR2014/008597
(87) International publication number: WO 2016/032044

(57) **Abstract**

The present invention relates to an oral cavity cleaning device.

The oral cavity cleaning device may include an air injection portion that injects high pressure air; a cleaning liquid tank that cleaning liquid is stored therein; an acceleration portion that is connected to the cleaning liquid tank through a first pipe body and is connected to an air injection portion through a second pipe body, and draws out cleaning liquid form the cleaning liquid tank by pressure difference and injects this, if high pressure air is supplied from the air injection portion; a nozzle portion that is connected to the acceleration portion by a pipe body and makes the cleaning liquid injected by high pressure air be injected to a tooth; and a switching portion that controls the air injection portion to reduce, increase injection amount of cleaning liquid, or stop the cleaning liquid.

## Description

### BACKGROUND OF THE INVENTION

### (a) Field of the Invention

This invention relates to oral cavity washer using compressed air.

More particularly, the present invention relates to a device that injects cleaning liquid toward teeth at high speed to be able to efficiently eliminate foreign matters within oral cavity.

### (b) Description of the Related Art

Generally, oral cavity washer pump cleaning liquid through a pump to supply a nozzle with this, and is a type that single injection nozzle injects this into an oral cavity.

In this process, because the cleaning liquid that is injected in large quantities does not have spray type and has water stream type, and the user has to carry out oral cleaning while continuously spitting a large amount of the cleaning liquid.

In addition, since the cleaning liquid is injected by a single water stream, the liquid jet is injected to the gums, the tongue, and the roof of the mouth when the jetting direction is out of the teeth due to external impact or vibration. Therefore, it is difficult to inject uniformly in the oral, and the water stream gives an uncomfortable feeling to a patient, and when the gum has a disease, it can be injected on the wound area and repeatedly applying a local impact may exacerbate the disease.

Also, a tooth brush is disclosed in a patent application number 10-2011-83691 (title: tooth brush), the tooth brush can clean teeth in the oral cavity, but there is a problem that cannot wash the oral cavity suitably.

The above information disclosed in this Background section is only for enhancement of understanding of the background of the invention and therefore it may contain information that does not form the prior art that is already known in this country to a person of ordinary skill in the art.

The above information disclosed in this Background section is only for enhancement of understanding of the background of the invention, and therefore it may contain information that does not form the prior art that is already known in this country to a person of ordinary skill in the art.

### SUMMARY OF THE INVENTION

The present invention has been made in an effort to provide an oral cavity washing device that accelerates cleaning liquid at high speed through a compressed air and injects this into the oral cavity to be able to eliminate dental plaque between teeth and foreign material within the oral cavity.

So as to achieve the above objects, an exemplary embodiment of the present invention offers an oral cavity cleaning device 1 that includes a case 2; an air injection portion 5 that is disposed on case 2 to inject high pressure air; a cleaning liquid tank 3 that cleaning liquid is stored therein; an acceleration portion 7 that is connected to the cleaning liquid tank 3 through a first pipe body L1 and is connected to an air injection portion 5 through a second pipe body L2, and draws out cleaning liquid form the cleaning liquid tank 3 by pressure difference and injects this, if high pressure air is supplied from the air injection portion 5; a nozzle portion 15 that is connected to the acceleration portion 7 through a pipe body and makes cleaning liquid be injected to tooth through high pressure air; and a switching portion that controls the air injection portion to reduce, increase injection amount of cleaning liquid, or stop the cleaning liquid.

As descried above, the oral cavity washing device according to exemplary embodiment of the present invention has the following advantages.

First, the tank in which the cleaning liquid is stored is connected to the high-pressure air tank, and it is possible to effectively remove foreign substances and the tartar within the oral cavity by injecting the cleaning liquid into the oral cavity by the high-pressure air.

Second, the nozzle portion and the pipe body are detachably connected by the coupling portion, when the nozzle portion is replaced, the nozzle portion ca be easily replaced by separating the replacement portion.

Third, the nozzle portion includes a horizontal portion and a vertical portion to effectively cover the outer side of the tooth, and injects high pressure cleaning liquid to be able to eliminate dental plaque.

Forth, this device includes a pressure wave portion and an adjuster to be able to effectively inject cleaning liquid.

Fifth, a scattering prevention protrusion is formed along an edge of the nozzle portion, and this can prevent the cleaning liquid from being scattered after the cleaning liquid collides with the tooth or the scattering prevention wall facing the nozzle.

Sixth, a concave groove is formed at an outer side of the inner side frame to be able to form a channel for injecting liquid through a simple process that an outer frame is engaged to cover the inner side frame.

### BRIEF DESCRIPTION OF THE DRAWINGS

FIG. 1 is a perspective view showing an oral cavity cleaning device according to an exemplary embodiment of the present invention.
FIG. 2 is a drawing schematically showing a structure of high pressure air injection portion shown in FIG. 1.
FIG. 3 is a drawing showing a condition that a nozzle portion of an oral cavity cleaning device shown in FIG. 1 covers an outer side of a tooth.
FIG. 4 is an exploded perspective view that a nozzle portion shown in FIG. 3 includes an outer frame and an inner side frame.
FIG. 5 is a top plan view showing a condition that a main pipe and a branch pipe are formed inside an inner side frame of FIG. 4.
FIG. 6 is a drawing showing an operation relation of a coupling portion shown in FIG. 1.
FIG. 7 is a drawing that is an another exemplary embodiment of an oral cavity washer showing in FIG. 1 and shows a pipe body fixation portion that a pipe body supplying cleaning liquid is wounded to be stored therein.

### DETAILED DESCRIPTION OF THE EMBODIMENTS

Hereinafter, an oral cavity cleaning device according to the present invention is detailed with reference the attached drawings.

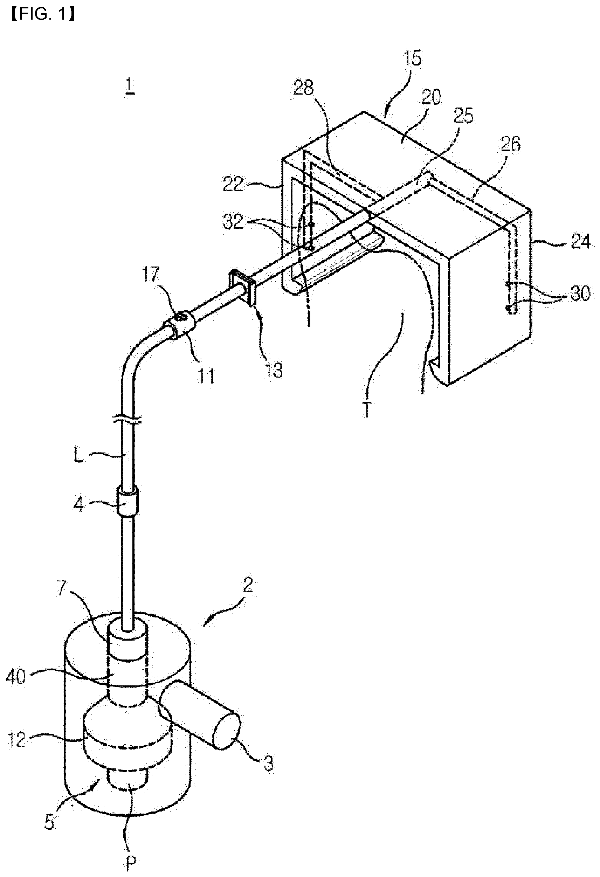

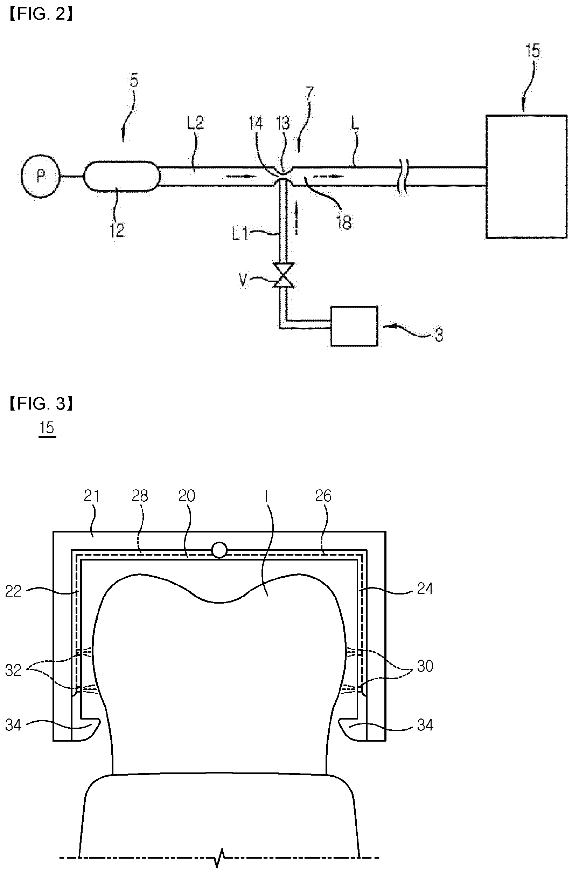

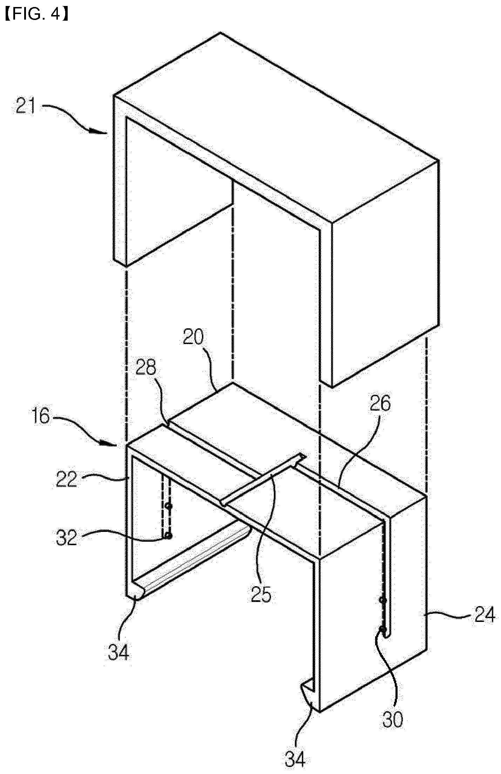

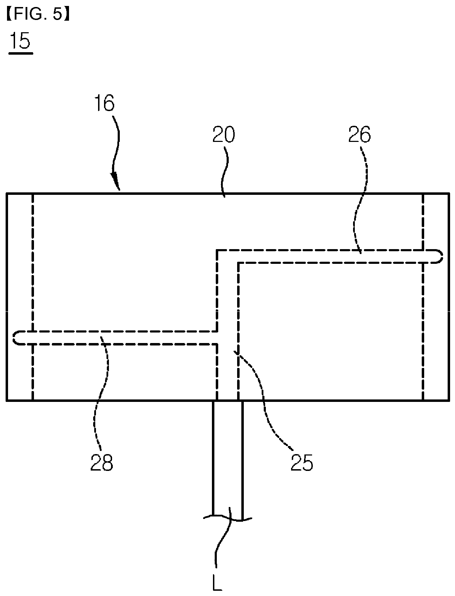

As shown in FIG. 1 to FIG. 6, an oral cavity cleaning device 1 according to the present invention includes a case 2; an air injection portion 5 that is disposed on case 2 to inject high pressure air; a cleaning liquid tank 3 that cleaning liquid is stored therein; an acceleration portion 7 that is connected to the cleaning liquid tank 3 through a first pipe body L1 and is connected to an air injection portion 5 through a second pipe body L2, and draws out cleaning liquid form the cleaning liquid tank 3 by pressure difference and injects this, if high pressure air is supplied from the air injection portion 5; a nozzle portion 15 that is connected to the acceleration portion 7 through a pipe body and makes cleaning liquid be injected to tooth through high pressure air; and a switching portion that controls the air injection portion to reduce, increase injection amount of cleaning liquid, or stop the cleaning liquid.

In the oral cavity cleaning device having this structure, the cleaning liquid tank 3 has a space of a predetermined volume that cleaning liquid can be stored therein.

And, the cleaning liquid tank 3 is connected to an acceleration portion 7 through a first pipe body L1. Accordingly, in a case that air passes the acceleration portion 7 at high speed, cleaning liquid stored in the tank is drawn out to be injected by a pressure difference.

In this process, an opening/closing valve Vis disposed on a first pipe body L1, and the valve Vis adjusted to be able to control the injection amount of cleaning liquid.

The air injection portion 5 includes an air tank 12 that air is stored therein; and an air pump P that pumps air to the air tank 12.

The air tank 12 has a predetermined volume, and air that is pumped by an air pump P is charged therein through an inflow passage. And, when the air pump P is operated, the air charged in the air tank 12 is supplied to the acceleration portion 7 through the second pipe body L2.

In this configuration, the air pump P is connected to a switch. Accordingly, the switch is turned on (ON), the air pump P is operated to inject air.

As described above, the air is supplied to the acceleration portion 7 through the second pipe body L2, and the air can be accelerated by the acceleration portion 7 at high speed.

That is, the acceleration portion 7 can have, for example, a venture pipe type such that the fluid speed can be varied to lower pressure thereof.

More specifically, the acceleration portion 7 includes an expansion pipe portion 14 that is formed on an end portion of a second pipe body L2; a shrink pipe portion 13 that is continuously formed on the expansion pipe portion 14 to increase fluid velocity; and an outlet 18 that discharges fluid passing the shrink pipe portion 13 at high speed.

And, a first pipe body L1 that is connected with a cleaning liquid tank 3 is connected with the shrink pipe portion 13.

Accordingly, if air is supplied from the expansion pipe portion 14 to pass the shrink pipe portion 13, a pressure difference is formed by air speed difference between the expansion pipe portion 14 and the shrink pipe portion 13.

The pressure of the shrink pipe portion 13 is decreased by the pressure difference, and the pressure of the cleaning liquid tank 3 becomes relatively larger.

Accordingly, the cleaning liquid stored in the cleaning liquid tank 3 is inhaled to the shrink pipe portion 13, and the cleaning liquid is mixed with high pressure air to be able to be injected from the nozzle portion 15.

Meanwhile, the nozzle portion 15 is disposed to cover an outer side of a tooth T, and a plurality of nozzles disposed therein injects cleaning liquid at high pressure to be able to eliminate dental plaque.

The nozzle portion 15 includes an inner side frame 16 that covers a tooth to inject cleaning liquid; an outer frame 21 that covers an outer side of the inner side frame to form pipes; a main pipe 25 that is formed between the outer frame 21 and the inner side frame and that the cleaning liquid can flow therein; a pair of branch pipes 28 and 26 that is respectively diverged from both sides of the main pipe 25; and a nozzle 30 and 32 that is respectively disposed at the branch pipe 26 and 28 to be able to inject cleaning liquid.

In the nozzle portion 15, the outer frame 21 has "∩" shape and is disposed to cover an outer side of the inner side frame.

And, the inner side frame 16 has "∩" shape to be able to cover a tooth T. That is, the inner side frame 16 includes a horizontal portion 20 that is disposed at an upper portion of a tooth Tin an horizontal direction; and a pair of vertical portion 24 that is respectively extended from both ends of the horizontal portion 20 to cover a side portion of the tooth T.

The inner side frame 16 is formed by flexible material to be able to effectively house the size of the tooth T. That is, in case of cleaning the molar teeth or cleaning another tooth T, it is possible to efficiently cope with the size of each tooth T.

And, a predetermined depth of concave groove is formed at an outer surface of the inner side frame 16 to form a main pipe 25 and branch pipe 26 and 28.

That is, the outer frame 21 is disposed so as to surround the inner frame 16 in a state where the inner frame 16 has a concave groove formed thereon, so that the channel can be formed by the concave groove closed in four directions. The channel forms the main pipe 25 and a pair of branch pipes 26 and 28.

The main pipe 25 is disposed inside the horizontal portion 20 of the frame 16 and is connected to the pipe L so that the cleaning liquid can be supplied.

Further, the pair of branch pipes 28 and 26 have a structure that they are laterally branched from the main pipe 25.

The pair of branch pipes 28 and 26 includes a first branch pipe 28 branching from the main pipe 25 in one direction and disposed inside the vertical sections 22 and 24; and a second branch pipe 26 disposed to face the first branch pipe 28, branched from the main pipe 25 in the other direction, and arranged inside the vertical portions 22 and 24.

In this time, it is more preferable that the first branch pipe 28 and the second branch pipe 26 are arranged to be offset from each other.

That is, in a case that the first branch pipe 28 and the second branch pipe 26 are disposed to be offset from each other, the cleaning liquid can be more uniformly injected between the teeth T.

In the above description, the number of branches branching from the main pipe 25 is limited to two, but the present invention is not limited thereto and can be suitably changed according to the specification.

The nozzles 30 and 32 are formed inside the lower ends of the first and second branch pipes 28 and 26. It is preferable that at least one of the nozzles 30 and 32 is disposed.

Accordingly, the cleaning liquid supplied through the tube L is supplied through the main pipe 25 and the first and second branch tubes 28 and 26, and is sprayed at high pressure through the nozzles 30 and 32 to be able to effectively remove foreign matters of the tooth T.

In addition, a scattering prevention protrusion 34 protrudes inside the edge of the frame 16 to prevent water from being scattered to the outside.

That is, the scattering prevention protrusions 34 protrude inwardly from the edges of the frame 16, respectively.

Therefore, if a high-pressure cleaning liquid is injected through the nozzles 30 and 32 and strikes the tooth T, the water may be scattered in the outer direction, but the horizontal portion 20 and a pair of vertical portions 20 and 24 firstly prevents water splashing, and this scattering prevention protrusion 34 secondly prevents water splashing.

Finally, in a condition that the horizontal portion, the vertical portion, and the scattering prevention protrusion 34 of the nozzle portion 15 surrounds the outside of the tooth (T), the oral cavity cleaning device 1 of the present invention injects a high-pressure cleaning liquid into the tooth to remove the dental plaque, which can prevent water splattering.

On the other hand, the nozzle portion 15 may be detachably coupled to the pipe body L by a coupling portion 13. Therefore, when the nozzle portion 15 is to be used for a long time or to be replaced with another nozzle portion 15, the nozzle portion 15 may be removed and replaced by the coupling portion 13.

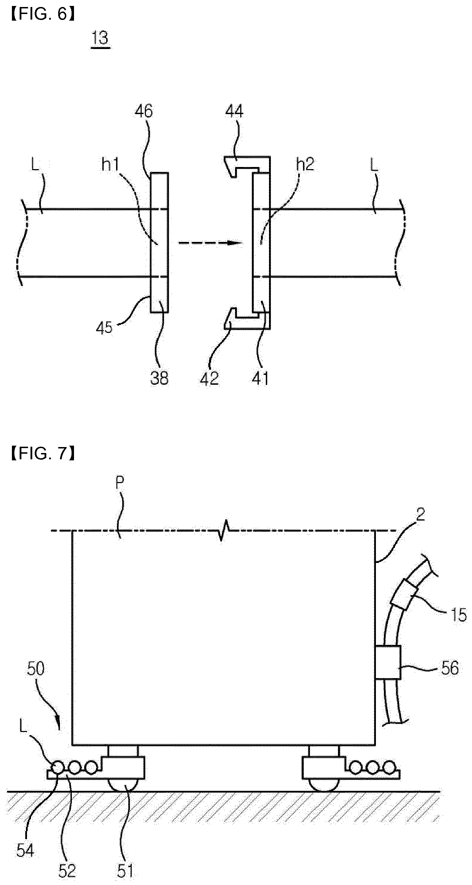

As shown in FIG. 1 and FIG. 6, the coupling portion 13 includes a first engagement plate 38 that one side is connected with a pipe body L; a second engagement plate 41 that one side is connected to the nozzle portion 15 and is detachably engaged with the first engagement plate 38; and a pair of latching elements 42 and 44 those protrude on the second engagement plates 40.

In the coupling portion 13 having this structure, a first through-hole h1 is formed in the first engagement plate 38 to be connected with the pipe body L. Accordingly, the cleaning liquid that is supplied through the pipe body L can flow the first through-hole h1.

A second through-hole h2 is formed in the second engagement plate 41 to be connected with the nozzle portion 15. Accordingly, if the first and second engagement plates 38 and 40 are matched with each other, the first and second through-hole h1 and h2 are connected to each other to allow the cleaning liquid to flow.

The pair of latching element 42 and 44 includes a first and second latching element 42 and 44. The first latching element 42 protrudes on one side of the second engagement plate 41 to be elastically hooked by a first latching groove 46 of the first engagement plate 38. And, the second latching element 44 protrudes on the other side of the second engagement plate 41 to be elastically hooked by a second latching grove 45 of the second engagement plate 41.

Accordingly, a first and second latching element 42 and 44 is respectively hooked by a first latching groove 46 and a second latching groove 45 to integrally combine the first engagement plate 38 with the second engagement plate 41.

Conversely, when replacing the nozzle portion 15, the first and second engaging plates 38 and 40 can be separated by releasing the first and second latching elements 42 and 44.

On the other hand, as another exemplary embodiment of the present invention, a pressure adjuster 40 and a pressure wave portion 40 may be additionally disposed in the pipe body L.

The pressure adjuster 40 is a conventional pressure adjuster, and the pressure of the cleaning liquid flowing through the pipe body L can be maintained constant.

According to the present invention, it is important to maintain the pressure of the cleaning liquid constantly, since the cleaning liquid from the nozzle portion 15 is sprayed at a high pressure and the sprayed water collides with the tooth.

The pressure wave portion 40 is disposed on the pipe body L to pressurize or release the cleaning liquid supplied through the pipe body L.

This pressure wave portion 40 means a pressure wave portion of a conventional structure.

In other words, pressure is generated by a piston or diaphragm to pump the cleaning liquid.

Accordingly, when the pressure wave portion 40 having such a structure applies pressure to the cleaning liquid flowing through the pipe body L, the cleaning liquid injected through the nozzle portion 15 can be injected at a high pressure.

And, when the pressure for the cleaning liquid is released, the pressure of the cleaning liquid injected through the nozzle portion 15 may be weakened or blocked.

Thus, by repeatedly applying or releasing pressure to the cleaning liquid by the pressure wave portion 40, the cleaning liquid sprayed through the nozzle portion 15 can more effectively remove the material or dental plaque between the teeth T.

The switch may be provided at a predetermined position of the pipe body to block or supply the cleaning liquid supplied along the pipe body L.

The switching portion 11 is assembled on the pipe body L and means ON or OFF switch. That is, the pipe body can be opened and closed by rotating the lever 17 of the switching portion 11 to the ON position or rotating the lever 17 to the OFF position.

Therefore, the user can control the cleaning liquid injected through the nozzle portion 15 by operating the lever 17 of the switching portion 11 to ON or OFF.

On the other hand, as another exemplary embodiment of the present invention, as shown in Figure 7, a pipe body hook portion 50 can be additionally provided at a lower portion of the case 2 to store the pipe body L wound thereon.

The pipe body hook portion 50 includes a body 52 inserted into a leg 51 protruded at a lower portion of the case 2; and a seated portion 54 which is formed to be concave on the upper portion of the body 52 and the pipe body L can be caught to be fixed to.

At this time, the legs 51 are protruded on both sides of the lower portion of the case 2, respectively. In addition, a pipe body hook portion 50 may be mounted on each leg 51. Accordingly, when the pipe body L is wound, the pipe body L is wound around the other pipe body hook portion 55 after passing through the one pipe body hook portion 50.

A nozzle hook portion 56 is provided at one side of the case 2. The nozzle hook portion 56 is concave so that the pipe body adjacent to the nozzle 15 can be received.

Accordingly, after a pipe body Lis wounded on the pipe body hook portion 50, the nozzle 15 of the end thereof can be fixed by hanging this on the nozzle hook portion 56.

### [Industrial availability]

The present invention relates to an oral cavity cleaning device that is used to eliminate foreign material and dental plaque and can be used in a dental clinic and medical institutions.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. An oral cavity cleaning device, comprising:
An air injection portion that injects high pressure air;
A cleaning liquid tank that cleaning liquid is stored therein;
An acceleration portion that is connected to the cleaning liquid tank through a first pipe body and is connected to an air injection portion through a second pipe body, and draws out cleaning liquid form the cleaning liquid tank by pressure difference and injects this, if high pressure air is supplied from the air injection portion;
A nozzle portion that is connected to the acceleration portion by a pipe body and makes the cleaning liquid injected by high pressure air be injected to a tooth; and
A switching portion that controls the air injection portion to reduce, increase injection amount of cleaning liquid, or stop the cleaning liquid.

2. The oral cavity cleaning device of claim 1, wherein:
the air injection portion includes an air tank that air is stored therein; and an air pump that is connected to a switching portion and supplies the air tank with air in a case that a switch is turned on.

3. The oral cavity cleaning device of claim 1, wherein:
the acceleration portion includes an expansion pipe portion that is formed at an end portion of the second pipe body; a shrink pipe portion that is continuously formed with the expansion pipe portion and have a smaller space than that of the expansion pipe portion to accelerate fluid speed; and an outlet that discharges fluid passing the shrink pipe portion at high speed.

4. The oral cavity cleaning device of claim 1, wherein the nozzle portion includes an inner side frame that surrounds an outer side of a tooth and injects cleaning liquid; an outer frame that covers an outer side of the inner side frame to form a pipe; an main pipe that is formed between the outer frame and the inner side frame and cleaning liquid flows therein; a pair of branch pipes that diverges from the main pipe and is extended to both sides; a nozzle that is respectively disposed on the branch pipe to be able to inject cleaning liquid and are arranged at an upper side, a lower side, a left side, and a right side; and a scattering prevention protrusion that protrudes on the inner surface of the inner side frame to prevent the scattering of cleaning liquid.

5. The oral cavity cleaning device of claim 4, wherein the inner side frame includes a horizontal portion that a concave groove is formed therein to form the main pipe and the branch pipe; and a pair of vertical portion that is extended from both sides end of the horizontal portion and an injection hole is formed to inject cleaning liquid, and a scattering prevention protrusion is protruded on an inner surface of the vertical portion to prevent the scattering of cleaning liquid.

6. The oral cavity cleaning device of claim 1, wherein the pipe body further includes a pressure wave portion and a pressure adjuster that can vary the pressure of cleaning liquid that is supplied through a pipe body or can stop cleaning liquid such that cleaning liquid is injected through the nozzle portion.

7. The oral cavity cleaning device of claim 1, wherein a pair of pipe body hook portion is further formed at a lower portion of the case, and the pipe body hook portion includes a body that is inserted into a leg that protrudes on a lower portion of the case; and a seated portion that is formed on an upper portion of the body to have a concave shape and that the pipe body is hooked to be fixed thereon.
